# EUROPEAN PATENT APPLICATION

(11) **EP 1 583 249 A1**
(43) Date of publication of application: **05.10.2005**
(21) Application number: 05003881.9
(22) Date of filing: 23.02.2005
(51) Int. Cl.: H04B 1/16, H04B 5/00, H04H 5/00, H04R 5/02

(54) **Apparatus for controlling power of external device in audio receiver**

(30) Priority: 31.03.2004 KR 2004022375
(71) Applicant: LG ELECTRONICS INC., Seoul 150-010 (KR)
(72) Inventor: Cho, Cheon Kwon, Nam-gu Incheon-si, 402-070 (KR)
(74) Representative: Vossius & Partner

(57) **Abstract**

Embodiments of a method and an apparatus for controlling power of an external device in an audio receiver can reduce unnecessary power consumption of the external device. The apparatus can detect a potential, a level or the like of a speaker output signal from the audio receiver and control the power of an external device coupled to the audio receiver, such as a Bluetooth transmitter module, on the basis of the detected potential, level or the like. Therefore, the power of the external device can be directly controlled without a separate manual operation. Further, the apparatus can be simply and conveniently implemented using only the speaker output signal of the audio receiver, without the addition of a separate signal line (Fig. 1).

## Description

The present invention relates to an apparatus for controlling power of an external device in an audio receiver.

A general audio reproduction apparatus includes audio receiver with an external device that can transmit and/or receive audio data wirelessly for reproduction by a speaker so a user can listen to sound outputted from the audio receiver. However, the related art audio reproduction apparatus have various disadvantages. For example, since power of the external device is managed independent of that of the audio receiver, it is applied to the external device even while the audio receiver is not used. Thus, the related art can cause unnecessary power consumption and operation of the external device. Further, there is the trouble of having to manually apply or cut off power to the external device in a separate manner from power-on/off of the audio receiver.

The above references are incorporated by reference herein where appropriate for appropriate teachings of additional or alternative details, features and/or technical background.

An object of the invention is to solve at least the related art problems and/or disadvantages or to provide at least the advantages described hereinafter.

Another object of the present invention is to provide an apparatus that is capable of controlling power of an external device in association with an audio receiver.

Another object of the present invention is to provide an apparatus that is capable of controlling power of an external device in an audio receiver by controlling power of the external device such as a wireless transmitter module according to a speaker output signal of the audio receiver.

In order to achieve at least the above objects or other advantages in a whole or in part, in accordance with one aspect of the present invention, there is provided an apparatus for controlling power of an external device for an audio receiver that includes a detector configured to detect an audio signal outputted from the audio receiver to the external device and a controller configured to control the power of the external device according to a result of the detection.

To further achieve at least the above objects or other advantages in a whole or in part, in accordance with one aspect of the present invention, there is provided a method for controlling power of an external device for an audio receiver that includes detecting an audio signal outputted from the audio receiver to the external device and controlling the power of the external device according to a result of the detection.

To further achieve at least the above objects or other advantages in a whole or in part, in accordance with one aspect of the present invention, there is provided an apparatus for controlling power of an external device for an audio receiver that includes a receiver module configured to generate an audio signal, an external wireless transmitter module configured to receive the audio signal and output a corresponding wireless signal, a wireless receiver module configured to receive the wireless signal and output a corresponding converted audio signal, a speaker configured to output the converted audio signal as sound, a detector configured to detect the audio signal outputted from the audio receiver to the external wireless transmitter module and a controller configured to control the power of the external wireless transmitter module according to a result of the detection.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a block diagram showing the configuration of a general audio reproduction apparatus;

Fig. 2 is a block diagram showing the configuration of a general audio receiver with an external device;

Fig. 3 is a block diagram showing the configuration of a general audio reproduction apparatus using a Bluetooth module;

Figs. 4 and 5 are block diagrams of different embodiments of an apparatus for controlling power of an external device in an audio receiver according to the present invention;

Fig. 6 is a block diagram of an embodiment of a Bluetooth transmitter module including the power control apparatus according to the present invention; and

Fig. 7 is a block diagram of an embodiment of a Bluetooth receiver module according to the present invention.

### DETAILED DESCRIPTION OF PREFERRED EMBODIMENTS

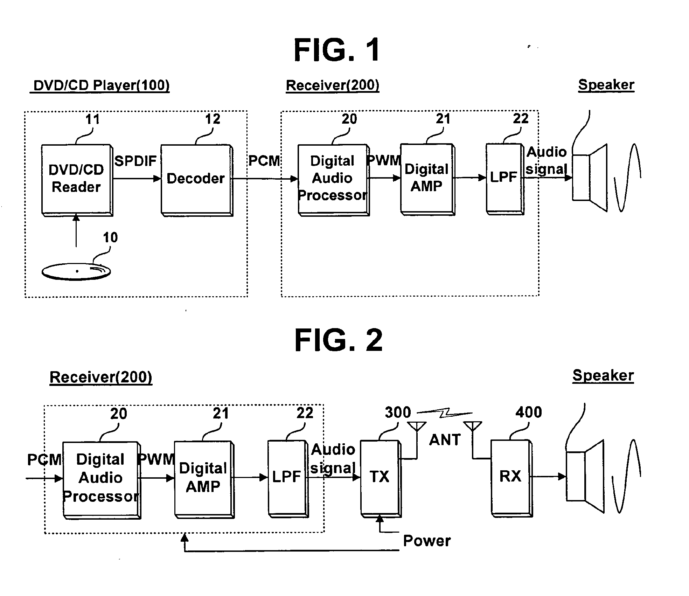

Fig. 1 shows the configuration of a general audio reproduction apparatus. As shown in Fig. 1, the audio reproduction apparatus has an optical disc player 100, an audio receiver 200 and a speaker. In general, an optical disc player capable of reproducing a compact disc (CD) and/or digital versatile disc (DVD) and an audio receiver are coupled such that the resulting product is introduced to the market in the form of, for example, a DVD receiver.

The optical disc player 100 includes a disc reader 11 for reading audio data recorded on an optical disc 10 such as a DVD or CD and a decoder 12. The decoder 12 is for decoding Sony Philips digital interface format (SPDIF) audio data read by the disc reader 11 into pulse code modulation (PCM) audio data and outputting the PCM audio data.

The audio receiver 200 includes a digital audio processor 20 for converting the PCM audio data from the optical disc player 100 into pulse width modulation (PWM) audio data and outputting the PWM audio data, a digital amplifier 21 and a low pass filter (LPF) 22. The digital amplifier 21 is for amplifying the PWM audio data from the digital audio processor 20. The low pass filter 22 is for filtering an output signal from the digital amplifier 21 at an audio frequency band and outputting the resulting audio signal to the speaker.

In operation, when a user of the audio reproduction apparatus of Fig. 1 inserts an optical disc, such as a DVD or CD, into the apparatus and then requests an audio play operation, the optical disc player 100 reads and decodes audio data recorded on the optical disc to output PCM audio data. This PCM audio data is converted into PWM audio data in the form of square-wave pulses by the digital audio processor 20 in the audio receiver 200. The converted PWM audio data is amplified by the digital amplifier 21, filtered by the LPF 22 and then outputted as audio-frequency sound through the speaker.

Fig. 2 shows the configuration of an audio receiver with an external device. In Fig. 2, the audio receiver is substantially the same as the audio receiver 200 in Fig. 1 and thus denoted by the same reference numeral 200. The audio receiver 200 in Fig. 2 is adapted to receive PCM audio data from the optical disc player 100 in Fig. 1, convert the received PCM audio data into PWM audio data, amplify the converted PWM audio data and filter the amplified PWM audio data at the audio frequency band to output an audio signal.

A transmitter module 300 of a local-area wireless communication device, such as Bluetooth, is adapted to convert the audio signal into data for wireless transmission and transmit the converted data wirelessly. A Bluetooth receiver module 400 is adapted to receive the wirelessly transmitted data, perform conversion, amplification and filtering operations with respect to the received data and output the resulting audio-frequency sound through the speaker.

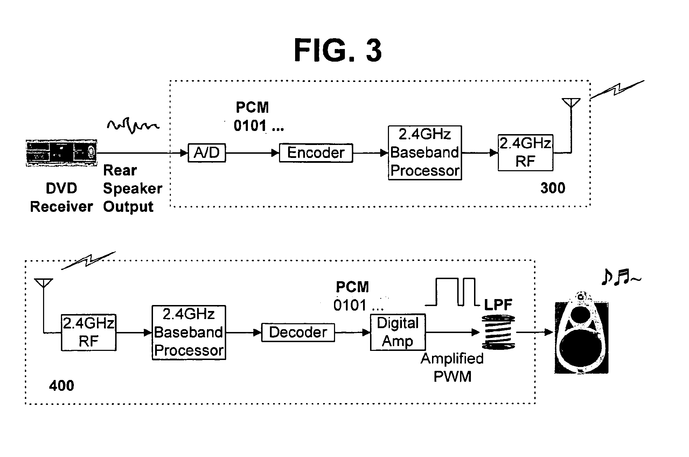

Fig. 3 shows the configuration of an audio reproduction apparatus using a Bluetooth module. The audio reproduction apparatus in Fig. 3 includes a DVD receiver, a Bluetooth transmitter module, a Bluetooth receiver module, and a speaker. The Bluetooth transmitter module analog/digital (A/D)-converts a speaker output signal (e.g., audio signal) of the DVD receiver into PCM data, performs encoding and baseband processing operations with respect to the PCM data such that the PCM data is appropriate to a Bluetooth standard, modulates the resulting data into a prescribed radio frequency (RF) signal, for example 2.4GHz, and transmits the RF signal wirelessly. The Bluetooth receiver module receives the RF signal of 2.4GHz from the Bluetooth transmitter module, converts the received RF signal into digital data, performs baseband processing and decoding operations with respect to the digital data, amplifies the resulting data through a digital amplifier, low pass filters the resulting PWM signal, and outputs the resulting audio-frequency sound through the speaker.

Accordingly, using the Bluetooth transmitter and receiver modules, the user can listen to the audio-frequency sound outputted from the audio receiver through a remote speaker.

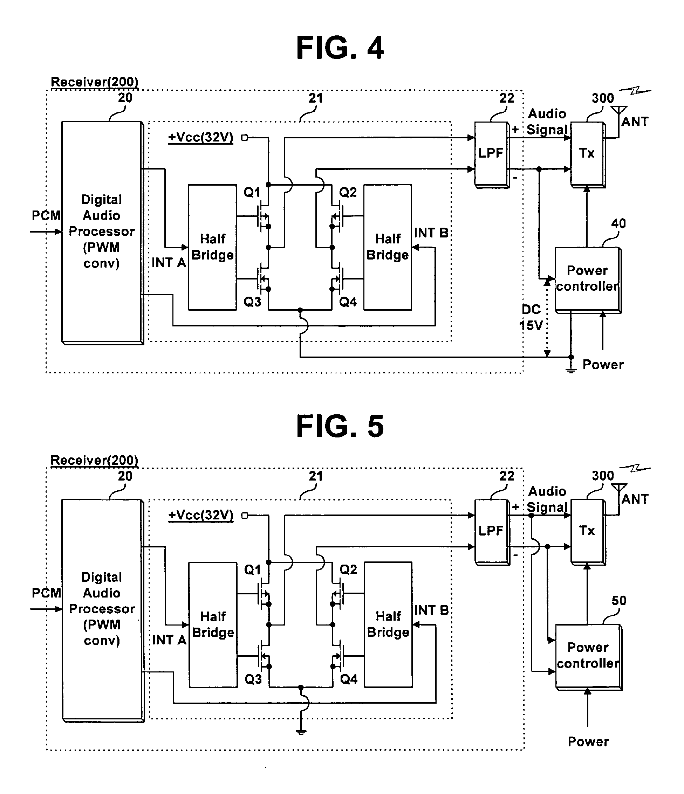

Figs. 4 and 5 are block diagrams of different embodiments of an apparatus for controlling power of an external device in an audio receiver according to the present invention. As shown in Figs. 4 and 5, an audio reproduction apparatus can include an audio receiver 200 in which a player such as a DVD player is included or from which it is separated, a transmitter module 300 of a local-area wireless communication device, such as Bluetooth, and a power controller 40 or a power controller 50, respectively for controlling power of the transmitter module 300. Although not shown in Figs. 4 and 5, the audio reproduction apparatus can include a receiver module of a local-area wireless communication device, such as Bluetooth, and a speaker.

The audio receiver 200 can include a digital audio processor 20 for converting PCM audio data into PWM audio data and outputting the PWM audio data, a digital amplifier 21 for amplifying the PWM audio data from the digital audio processor 20, and an LPF 22 for filtering an output signal from the digital amplifier 21 at an audio frequency band and outputting the resulting audio signal.

The digital amplifier 21 can be adapted to amplify PWM audio data of square-wave pulses using a half-bridge circuit or full-bridge circuit. As shown in Figs. 4 and 5, a prescribed voltage of DC (e.g., +32V) can be supplied to the digital amplifier 21 and PWM waveforms having opposite phases are applied respectively to terminals INT A and INT B of the half-bridge circuit. As the PWM waveforms make high/low transitions repeatedly, the half-bridge circuit can be repeatedly turned on/off to generate a signal switched repeatedly about DC (e.g., 15V).

The signal switched about DC 15V can be filtered by the LPF 22 and then inputted as a speaker output signal of the audio frequency band to the Bluetooth transmitter module 300. A potential difference of 15V can be generated between the speaker output signal (+/-) and ground GND. However, when the audio receiver 200 is powered off, the potential of the speaker output signal becomes 0V.

In the embodiment of Fig. 4, the power controller 40 can be adapted to detect a DC potential between any one component of the speaker output signal (+/-), for example, a negative (-) output signal component, and the prescribed voltage (e.g., ground) for controlling power of the Bluetooth transmitter module 300 on the basis of the detected potential. For example, the power controller 40 can apply power to the Bluetooth transmitter module 300 when the detected potential is 15V, and no power to the Bluetooth transmitter module 300 when the detected potential is 0V.

In the embodiment of Fig. 5, the power controller 50 can be adapted to detect the level of the speaker output signal and control power of the Bluetooth transmitter module 300 on the basis of the detected level. For example, the power controller 50 can apply power to the Bluetooth transmitter module 300 when the detected speaker output signal level is higher than or equal to a predetermined level, and no power to the Bluetooth transmitter module 300 when the detected speaker output signal level is lower than the predetermined level or is 0.

Therefore, in embodiments of the audio receiver, it is possible to control the supply of power to the external device such as the Bluetooth transmitter module according to the DC potential, level of the speaker output signal or the like. Alternatively, the power controller may be contained in another embodiment of an audio receiver or the Bluetooth transmitter module.

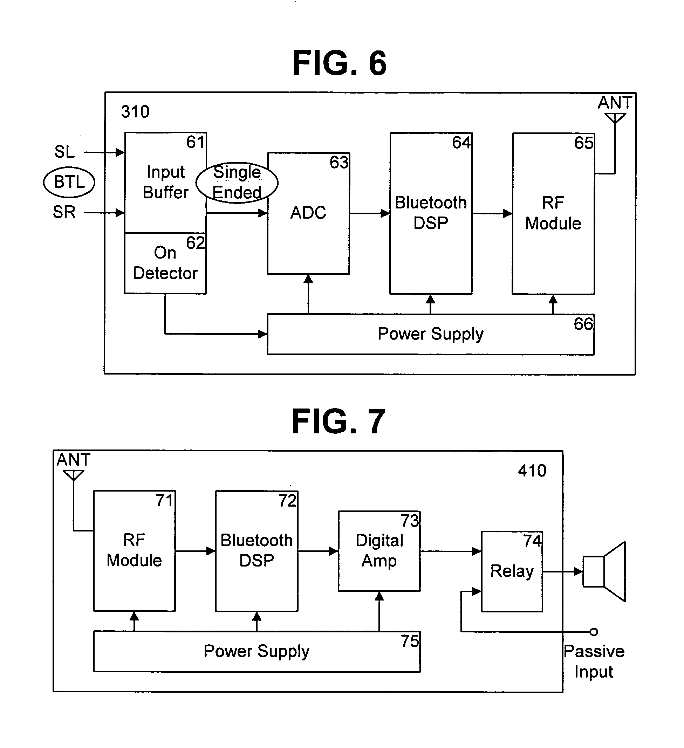

Fig. 6 is a block diagram of an embodiment of a Bluetooth transmitter module including the power control apparatus. As shown in Fig. 6, a Bluetooth transmitter module 310 can include an input buffer 61, an on detector 62, an ADC 63, a Bluetooth DSP 64, an RF module 65, an antenna, and a power supply 66.

The input buffer 61 can receive a speaker output signal, for example, a balanced transformer-less (BTL) signal, reduce the level of the received signal, and output a single ended signal using a differential amplifier.

The on detector 62 can directly or automatically control the power supply 66 according to the potential of the speaker output signal. For example, the on detector 62 can detect, from the speaker output signal, a power-on state of the receiver that outputs the speaker output signal, and control the power supply 66 of the Bluetooth transmitter module 310 on the basis of the detection result.

For distinction between a low volume state of the speaker output and a power-off state of the receiver, the on detector 62 can measure the potential of the speaker output signal and detect the power-on/off state of the receiver on the basis of the measured potential. When the receiver is powered on, the on detector 62 can turn on the power supply 66 of the Bluetooth transmitter module 310 at once. When the receiver is powered off, the on detector 62 preferably turns off the power supply 66 of the Bluetooth transmitter module 310 gradually after 20 minutes.

Fig. 7 is a block diagram of an embodiment of a Bluetooth receiver module. As shown in Fig. 7, a Bluetooth receiver module 410 can include an antenna, an RF module 71, a Bluetooth DSP 72, a digital amplifier 73, a relay 74, and a power supply 75. The Bluetooth receiver module 410 can switch the relay 74 to support two modes, an active mode for, when a signal from the Bluetooth transmitter module is transmitted, converting the transmitted signal and outputting the converted signal to the speaker, and a passive mode for, otherwise, connecting an output signal of a wired external speaker to the speaker. The Bluetooth receiver module 410 can incorporate embodiments of an apparatus or method for controlling power described above according to the present invention.

The power supply 75 of the Bluetooth receiver module 410 can be operated in three modes to control power of the digital amplifier 73. In a standby mode, the power supply 75 can output DC power of 5V to wait until a signal from the Bluetooth transmitter module is transmitted. In the active mode, the power supply 75 can automatically turn on the power of the digital amplifier 73. In the passive mode, the power supply 75 can automatically turn off the power of the digital amplifier 73.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

As described above, embodiments of methods and apparatus for controlling power for an audio receiver according to the present invention have various advantages. For example, embodiments can control power of an external device coupled to an audio receiver, such as a Bluetooth transmitter module, in association with a power state of the audio receiver. Further, embodiments according to the present invention reduce or prevent unnecessary power consumption of an external device connected to an audio receiver, such as a Bluetooth transmitter module. Embodiments can remove the trouble of having to additionally turn on/off power of an external device connected to an audio receiver in a separate manner from power-on/off of the audio receiver. In addition, embodiments of an apparatus for controlling power of an external device connected to an audio receiver, such as a Bluetooth transmitter module, can be simply and conveniently implemented using only a speaker output signal of the audio receiver, without the addition of a separate signal line.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An apparatus for controlling power of an external device for an audio receiver, comprising:
a detector configured to detect an audio signal outputted from the audio receiver to the external device; and
a controller configured to control the power of the external device according to a result of the detection.

2. The apparatus of claim 1, wherein the detector is adapted to detect a potential difference between the audio signal and reference voltage.

3. The apparatus of claim 2, wherein the controller is adapted to supply the power to the external device when the detected potential difference is higher than or equal to a predetermined value, and wherein the external device is a wireless transmitter of a local-area network device.

4. The apparatus of claim 1, wherein the detector is adapted to detect a level of the audio signal.

5. The apparatus of claim 4, wherein the controller is adapted to supply the power to the external device when the detected level is higher than or equal to a predetermined value.

6. The apparatus of any of claims 1 to 5, wherein the external device is a transmitter module of a local-area wireless communication device, the transmitter module converting the audio signal into data for wireless transmission and transmitting the converted data wirelessly to a receiver module connected with a speaker.

7. The apparatus of claim 6, wherein the transmitter module is a Bluetooth transmitter module.

8. The apparatus of any of claims 1 to 7, wherein the apparatus is contained in the external device.

9. The apparatus of any of claims 1 to 8, wherein the audio receiver is part of a home theater system.

10. A method for controlling power of an external device for an audio receiver, comprising:
detecting an audio signal outputted from the audio receiver to the external device; and
controlling the power of the external device according to a result of the detection.

11. The method of claim 10, wherein the detecting comprises:
judging a potential difference between the audio signal and reference voltage; and
supplying the power to the external device when the detected potential difference is higher than or equal to a predetermined value.

12. The method of claim 11, wherein the external device is a wireless transmitter of a local-area network device, and wherein the supplying the power to the external device interrupts the power when the detected potential difference is lower than the predetermined value.

13. The method of claim 10, wherein the detecting comprises:
judging a level of the audio signal;
supplying the power to the external device when the detected level of the audio signal is higher than or equal to a predetermined value; and
interrupting the power when the detected level of the audio signal is lower than the predetermined value.

14. The method of any of claims 10 to 13, wherein the external device is a transmitter module of a local-area wireless communication device, the transmitter module converting the audio signal into data for wireless transmission and transmitting the converted data wirelessly to a receiver module connected with a speaker.

15. The method of claim 14, wherein the transmitter module is a Bluetooth transmitter module, and wherein the audio receiver is part of a home theater system.

16. The method of any of claims 10 to 15, wherein the detecting and controlling is performed by a device, wherein the device is located in the audio receiver, in the external device or separate from the audio receiver and the external device.

17. An apparatus for controlling power of an external device for an audio receiver, comprising:
a receiver module configured to generate an audio signal;
an external wireless transmitter module configured to receive the audio signal and output a corresponding wireless signal;
a wireless receiver module configured to receive the wireless signal and output a corresponding converted audio signal;
a speaker configured to output the converted audio signal as sound;
a detector configured to detect the audio signal outputted from the audio receiver to the external wireless transmitter module; and
a controller configured to control the power of the external wireless transmitter module according to a result of the detection.

18. The apparatus of claim 17, wherein the controller is adapted to supply the power to the external wireless transmitter module when a detected characteristic of the audio signal is higher than or equal to a predetermined value, and wherein the controller interrupts the power to the external wireless transmitter module when the detected characteristic of the audio signal is lower than the predetermined value.

19. The apparatus of claim 17 or 18, wherein the apparatus is in a portable computer.
